# EUROPEAN PATENT APPLICATION

(11) **EP 1 353 463 A1**
(43) Date of publication of application: **15.10.2003**
(21) Application number: 03008246.5
(22) Date of filing: 09.04.2003
(51) Int. Cl.: H04J 3/17, H04L 5/14

(54) **Method for channel allocation in a TDD system by using Voice Activity Detection**

(30) Priority: 10.04.2002 IT MI20020768
(71) Applicant: PROD-EL S.p.A., 20132 Milano (IT)
(72) Inventor: Zani, Nicola, 25075 Nave (BS) (IT); Proto, Egidio, 21013 Gallarate (VA) (IT); Garue, Elena, 20144 Milano (IT); Benfatto, Davide, 20149 Milano (IT)
(74) Representative: Cioni, Carlo

(57) **Abstract**

Procedure for implementing an effective pseudo-duplex operation oven a simplex transmission channel by means of dynamic allocation of transmission time devoted to subseribers characterized by the fact that the digital voice codes equipping the Mobile Stations translate voice fragments into binary arrays called Speech Frames (SF) with a fixed leught, each Mobile Station processes a fixed number of SFs an sends to the other part in its transmission interval a parameter dependent an subseribers voice activity called GVAD, the receving Mobile Stations compare GVAD values with the preceding ones, being therefore able to compute the new transmission intervals.

## Description

### Technical field

The following invention relates to the field of digital land-mobile radio communications employing a single radio-frequency channel or a couple of radio-frequency channels in order to build-up a single simplex transmission channel, where Mobile Stations can communicate in direct mode or through a repeating Base Station [for the definition of terms, please refer to Recommendation ITU-R V. 662-3, "Terms and definitions"].

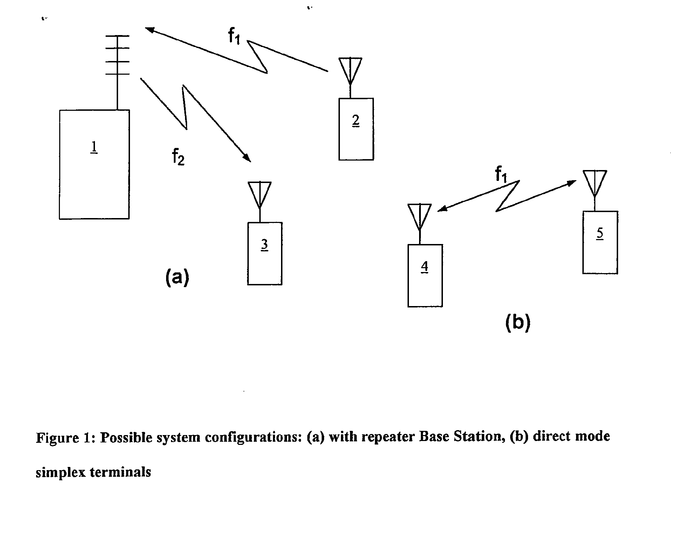

In case of communication through a repeating Base Station (Figure 1-a), the first radio-frequency channel is used for communications from Mobile Station to the Base Station, whereas the second one is used for communications in the opposite direction.

In case of direct-mode communications (Figure 1-b), a single radio-frequency channel is used by the two Mobile Stations in a time-shared fashion.

### Background of the invention

Digitized voice communications by means of radio generally entail a temporal structure of binary information exchange based upon the following elements:
Timeslot: the smallest temporal unit regularly repeated and containing a fixed number of information bits;
Frame: a structure composed by a fixed number of adjacent timeslots conveying voice transmission.

Timeslots devoted to signalling could also be inserted between Frames.

Bi-directional communications can be performed by a single transceiver unit by means of a "duplexer", a device allowing simultaneous transmission and reception over a transmission channel built-up by two radio-frequency channels.

Notwithstanding, the use of duplexers is not feasible for Mobile Stations, because of costs and weight constraints.

A more convenient technique is to equally subdivide the total available transmission time between the two subscribers involved in the communication. This operation mode is generally referred to as Time Division Duplexing (TDD).

For example, TDD is used in GSM (Global System for Mobile communications). GSM requires two radio-frequency channels for bi-directional communications between a Mobile

Station and a Base Station.

In the course of a voice call, each subscriber is given the same transmission time (timeslot), apart from its own actual voice activity. When no voice activity is detected, the Mobile Station inhibits transmission, but the corresponding transmission interval remains reserved once for all, therefore it is unused.

It is apparent that TDD systems suffer from the drawback of static assignment of transmission intervals to subscribers. This technique is very inefficient for systems employing simplex transmission channels. It is also generally known that in most voice calls simultaneous voice activity from both subscribers is rare: static resource allocation is therefore far from optimality.

### Description of the invention

The present invention is intended to implement an effective pseudo-duplex operation over a simplex transmission channel by means of dynamic allocation of transmission time devoted to subscribers.

The most suitable allocation of transmission time for both subscribers can be computed according to a measure of their own voice activity.

The assignment shall be regulated by a protocol allowing good channel utilization; at the same time this protocol must be very resilient to radio-propagation disturbances, since it is very important that both subscribers compute exactly the same percentages of transmission time.

In particular, the following invention relates to a procedure for dynamical assignment of transmission time over a simplex transmission channel, based upon the fact that digital voice coders equipping the Mobile Stations translate voice fragments into binary arrays called Speech Frames (SF) with a fixed length, each Mobile Station processes a fixed number of SFs and sends to the other part in its transmission interval a parameter dependent on subscribers voice activity called GVAD (see the following), the receiving Mobile Stations compare GVAD values with the preceding ones, being therefore able to compute the new transmission intervals.

In the following, an efficient protocol for channel allocation is described, in conjunction with a suitable error-control coding scheme for the application of the proposed invention.

It is mostly helpful that, in case of no voice activity, the inactive subscriber sends to the active party the parameters necessary to synthesize background noise, called "comfort noise". Comfort noise prevents from the bothersome subjective sensation that the call has been dropped when there is no acknowledge from the listener.

In the course of a call, different cases can happen according to subscribers voice activity. In the following, the subscribers will be called User A and User B. Four cases can be foreseen:
case 1: User A active - User B inactive;
case 2: User A inactive - User B active;
case 3: User A active - User B active;
case 4: User A inactive - User B inactive;

For example, the following percentages of channel utilization can be foreseen:
case 1: User A 90%- User B 10%
case 2: User A 10%- User B 90%
case 3: User A 50% - User B 50%
case 4: User A 10% - User B 10%

The above cases are summarized in Table 1, showing also the transmitted Speech Packets:

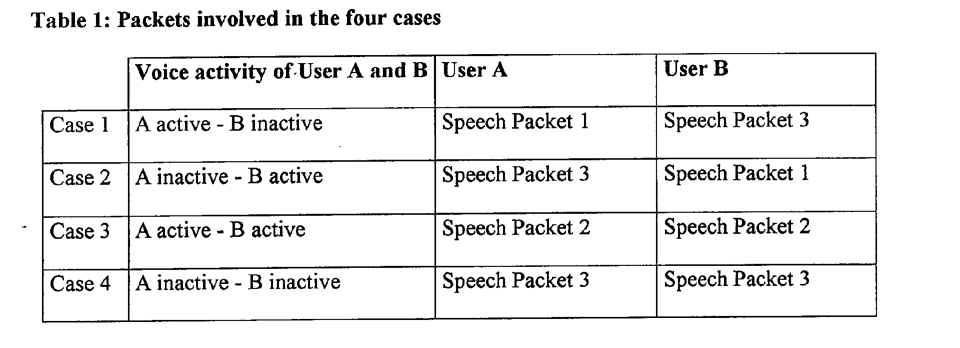

There are three kinds of Speech Packets (SP):
Speech Packet 1 (SP1): it is used by the active User in case 1 and case 2;
Speech Packet 2 (SP2): it is used by the active Users in case 3;
Speech Packet 3 (SP3): it is used by the inactive User in case 1, case 2 and case 4.

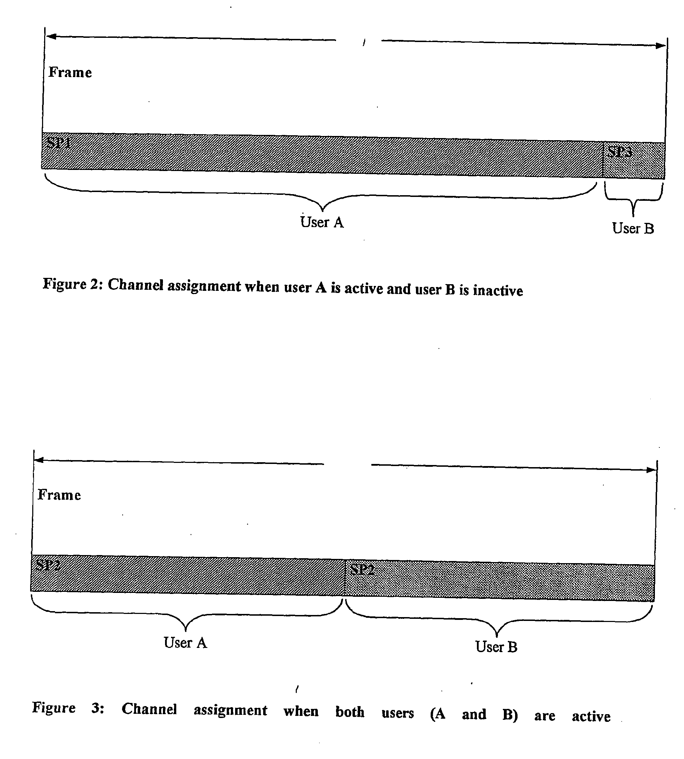

Suppose that User A begins a voice call directed to User B; furthermore, in the first part of the conversation let A be an active User, whereas User B is inactive. In this scenario, 90% of transmission time could be initially assigned to User A, as shown in Figure 2. When, during the call, User B becomes active too, both users are given 50% of transmission time, as depicted in Figure 3.

From the above discussion, it follows that, when the voice activity of one or both users changes, the users themselves need to make a state transition.

For example, starting from case 1, when User B becomes active, a transition towards case 3 has to be performed by both users (Figure 3), otherwise voice call is dropped.

In the following, an algorithm for dynamic channel assignment allowing efficient state transitions will be described in detail.

We will take into account terminal radios equipped with digital voice coders (vocoders), changing voice fragments into binary arrays called Speech Frame (SF) having a fixed length. The vocoders also compute a measure of the user voice activity, called VAD (Voice Activity Detector). VAD is equal to 1 if the SF contains digitized voice, whereas is equal to 0 if the SF conveys background noise information only.

A fundamental principle of this invention is to process a fixed number, say N, of VADs, corresponding to N consecutive SFs, in order to compute an overall figure called GVAD (Global Voice Activity Detection) specifying whether the entire set of N SFs is to be considered as containing voice frames or background noise frames.

Terminals of users A and B involved in a voice call shall operate as follows:
terminal of user A computes GVAD_{A} processing a number N of consecutive SFs; A sends this parameter to B in the proper transmission interval;
terminal of user B computes GVAD_{B} processing a number N of consecutive SFs; B sends this parameter to A in the proper transmission interval;
terminals of users A and B compare the present values of GVAD_{A} and GVAD_{B} with the corresponding figures for the preceding frames;
no state transition is performed if both GVADs do not change;
if one or both GVAD change, the state in the successive frame has to be changed.

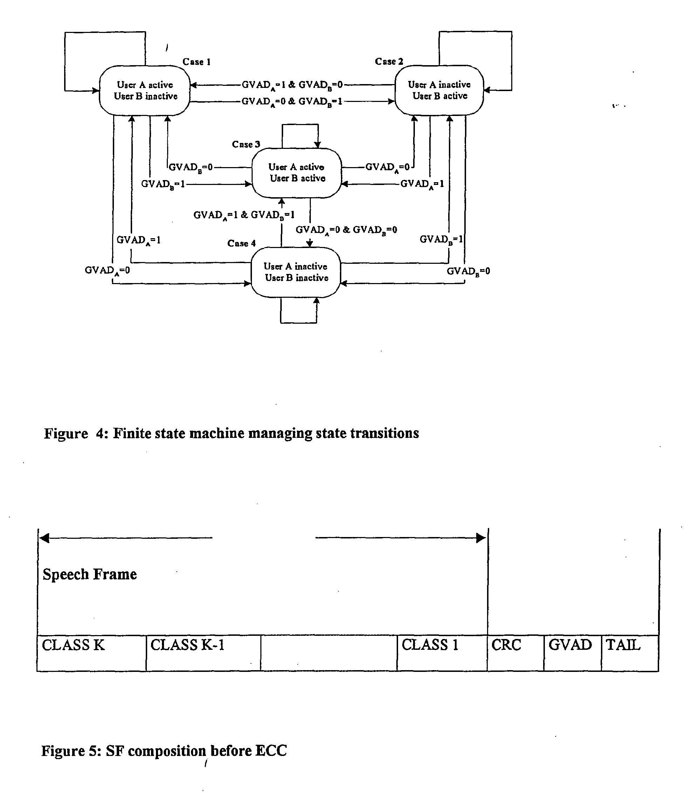

Figure 4 shows a finite state machine accounting for the allowed state transitions. Figure 4 depicts only GVAD values causing state transitions.

The algorithm necessary to compute the GVADs is the following:
if the number of VADs equal to 1 is greater than a fixed threshold S₁, then put GVAD =1;
if the number of VADs equal to 1 is smaller than threshold S₂ (being S₂ < S₁), then put GVAD = 0;
if the number of VADs equal to 1 is smaller than S₁ and greater than S₂, then GVAD holds the past value.

In Table 2 we show an exemplary calculation when S₁=N-2 and S₂=2.

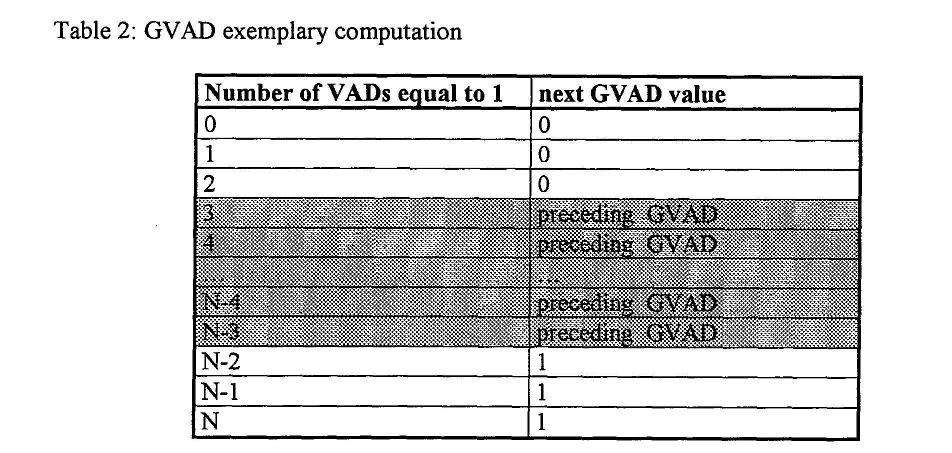

The described procedure requires that both users agree with respect to GVAD values, therefore it is very important that GVAD information is highly protected from transmission errors randomly occurring during the call by means of an ECC (Error Control Coding) scheme.

If not properly detected, a transmission error could cause incompatible state transitions, consequently the voice call could drop.

Since each user sends a fixed number N of CSFs (Coded SFs) in SP1 or SP2 packets, it is recommendable that every CSF shall be obtained coding an SF together with the associated GVAD. This way, all the N CSFs in a Speech Packet retain the same GVAD value. The receiver therefore can process N GVADs and detect the transmitted one with a simple and robust majority decoding technique.

When a SP3 packet has to be transmitted, the same GVAD value could be repeated N times and suitably protected together with comfort noise parameters.

The length of a SF depends on the voice coder features, whereas the CSF length is determined by the SP length. The necessary length modulation of the CSF shall be performed changing the number of redundant binary digits added by the Error Control Coding algorithm.

CSFs in SP1 packets hold a greater redundancy than CSFs in SP2 ones.

An efficient way to supply two different levels of redundancy is described in the following. This method also complies with the inclusion of GVAD parameter into the CSFs in order to get a most resilient communication.

First of all, we have to specify further vocoder operation. Modem vocoders generally divide digitized voice bits into classes showing different importance with respect to voice message intelligibility; therefore, the most important class is also the most sensitive to transmission errors and requires a greater protection, i.e. greater redundancy.

An effective procedure for different classes protection relies on RCPC (Rate Compatible Punctured Convolutional) codes, a subclass of punctured convolutional codes [for futher details and related terms, please refer to J. Hagenauer, "Rate Compatible Punctured Convolutional Codes (RCPC Codes) and their Applications", IEEE Transactions on Communications, VOL. 36 NO. 4, April 1988]. The basic idea concerned with RCPC codes is that a SF coded with a lower rate mother code can be iteratively punctured, thereby supplying for a variable amount of error protection and coded packet length. In RCPC codes erasures have to chosen properly, to do not worsen the performances of the ECC scheme.

Figure 5 shows the composition of a SF, where class 1, which holds the most important bits, is adjoined with the following three fields (before ECC is applied to):
- CRC field (Cyclic Redundancy Check), which is devoted to detect residual errors after RCPC decoding;
- GVAD field, which accounts for voice activity status;
- TAIL field, which is often used to allow a more secure RCPC decoding procedure.

GVAD field is placed before TAIL field and it is given the protection rate of class 1 bits. This choice allows great resiliency of the state transitions to transmission channel errors.

The described procedure is able to offer both good channel assignment efficiency - i.e. fast transitions - and good robustness thanks to the inherent double protection granted to GVAD parameter.

## Claims

1. Procedure for implementing an effective pseudo-duplex operation oven a simplex transmission channel by means of dynamic allocation of transmission time devoted to subseribers **characterized by** the fact that the digital voice codes equipping the Mobile Stations translate voice fragments into binary arrays called Speech Frames (SF) with a fixed leught, each Mobile Station processes a fixed number of SFs an sends to the other part in its transmission interval a parameter dependent an subseribers voice activity called GVAD, the receving Mobile Stations compare GVAD values with the preceding ones, being therefore able to compute the new transmission intervals.

2. Procedure for implementing an effective pseudo-duplex transmission accoridng to the preceding claim **characterized in that** the parameter GVAD is computed by processing a fixed number, say N, of VADs corresponding to N conreeutive SFs on the gorund of the following algorithm:
- if the number of VADs equal to 1 is greater than a fixed threshould Si, GVAD is equal to 1;
- if the number of VADs equal to 1 is smaller than threshold S2 (being S₂<S₁), GVAD is equal to 0;
- if the number of VADs equal to 1 is smaller than S₁ and greater than S₂, GVAD holds the preceding frame value.

3. Procedure for implementing an effective pseudo-duplex transmission according to claim 1 **characterized in that** GVAD information is protected from transmission errors randomly occuring during the coll by means of an ECC scheure.

4. Procedure for implementing an effective pseudo-duplex transmission according to claims 1 and 3 **characterized in that** each user sends a fixed number of CSFs (Coded SFs).

5. Procedure for implementing an effective pseudo-duplex transmission according to claims 1 and 3 **characterized in that** a SF, before ECC is applied thereto, is adjoned wiht the fields CRC, GVAD, Tail, preferably in this sequence order.

6. Procedure for implementing an effective pseudo-duplex transmission according to claims 1 and 5 **characterized in that** the Mobile Stations send a fixed number of CSFs containing the same GVAD value.

7. Procedure for implementing an effective pseudo-duplex transmission according to claims 1 and 5 **characterized in that** the receiving Mobile Stations detect the transmitted GVADs with a majority decoding technique.

8. Procedure for implementing an effective pseudo-duplex transmission according to claim 1 characterized also in that a receving Mobile Station compare GVAD values with the preceding ones to compute the new transmission intervals as follows:
- no state transition is performed if both GVADs do not change;
- if one or both GVADs change, the state in the successive frame has to be changed.
